# FASCICULE DE BREVET EUROPEEN

(11) **EP 4 107 367 B1**
(45) Date de publication et mention de la délivrance du brevet: **16.04.2025**
(21) Numéro de dépôt: 20706432.0
(22) Date de dépôt: 17.02.2020
(51) Int. Cl.: F01C 17/02, F01C 19/00, F04C 2/12, F04C 15/00

(54) **DISPOSITIF POUR LA RECIRCULATION D'UNE COMPOSITION AU MOINS PARTIELLEMENT GAZEUSE CONTENANT DE L'HYDROGÈNE ET SYSTÈME DE PILE À COMBUSTIBLE**
ANORDNUNG ZUR UMWÄLZUNG EINES ZUMINDEST TEILWEISE GASFÖRMIGEN, WASSERSTOFF ENTHALTENDEN GEMISCHES UND BRENNSTOFFZELLENSYSTEM
DEVICE FOR RECIRCULATION OF A MIXTURE AT LEAST PARTIALLY GASEOUS COMPRISING HYDROGENE AND FUEL CELL SYSTEM

(43) Date de publication de la demande: 28.12.2022
(73) Titulaire: Busch Produktions GmbH, 79689 Maulburg (DE)
(72) Inventeur: BILGER, Théo, 68510 Helfrantzkirch (FR); KOSSEK, Boris, 79618 Rheinfelden (DE); BENZ, Matthias, 79540 Lörrach (DE); PERROT, Yohann, 25150 PONT DE ROIDE (FR)
(74) Mandataire: BOVARD AG
(86) Numéro de dépôt international: PCT/EP2020/054026
(87) Numéro de publication internationale: WO 2021/164843

(56) Documents cités:
- EP-A1- 0 859 154
- EP-A1- 1 975 410
- CN-A- 110 319 004
- JP-A- H07 317 553

## Description

### Domaine technique de l'invention

La présente invention se rapporte dans un premier aspect au domaine des dispositifs pour la recirculation d'une composition au moins partiellement gazeuse, en particulier une composition au moins partiellement gazeuse contenant de l'hydrogène. La présente invention se rapporte plus précisément au domaine des dispositifs pour la recirculation d'une composition au moins partiellement gazeuse contenant de l'hydrogène dans une pile à combustible, en particulier une pile à combustible pour véhicules automobiles. Dans un deuxième aspect, la présente invention se rapporte à un système de pile à combustible permettant la recirculation d'une composition au moins partiellement gazeuse contenant de l'hydrogène

### État de la technique

Dans un système de pile à combustible, l'hydrogène et l'oxygène gazeux sont nécessaires pour la production d'électricité. Afin de contribuer à évacuer l'eau générée par la réaction de l'hydrogène et de l'oxygène de la pile à combustible, cette dernière est fournie en gaz avec un débit gazeux plus important que ce qui est transformable.

Ainsi, une pile à combustible décharge une composition au moins partiellement gazeuse contenant de l'hydrogène gazeux (appelé gaz d'échappement de l'hydrogène) n'ayant pas réagi et qui n'a pas été utilisé dans la pile à combustible. Afin de pouvoir utiliser ce gaz d'échappement d'hydrogène, le système de pile à combustible est équipé d'un circuit de recirculation d'hydrogène pour réalimenter la pile à combustible avec le gaz d'échappement d'hydrogène. Pour ce faire, le circuit de recirculation d'hydrogène est normalement équipé d'un dispositif de recirculation d'hydrogène.

Il est connu de l'art antérieur d'utiliser comme dispositif de recirculation d'hydrogène, un éjecteur ou une pompe de type roots (CN110319004A). Cette dernière est composée de la partie pompe et de la partie moteur comprenant un moteur électrique d'entraînement. Un arbre rotatif s'étend du moteur électrique de l'unité motrice à l'unité de pompage et une paire de rotors est logée dans la chambre de pompage. Lorsque les deux rotors sont mis en rotation par la rotation de l'arbre rotatif entrainé par le moteur, le gaz d'échappement d'hydrogène est aspiré dans la chambre de pompage, puis déchargé de cette dernière et réintroduit dans la pile à combustible.

Il est important qu'une pompe dédiée à la recirculation de l'hydrogène soit configurée de telle façon à éviter que le gaz d'échappement d'hydrogène aspiré dans la chambre de pompage ne pénètre dans l'unité moteur ou que la concentration d'hydrogène dans l'unité moteur n'atteigne une valeur à laquelle un danger d'explosion est présent. Pour ce faire, les dispositifs connus de l'art antérieur utilisent un joint d'arbre qui est normalement prévu entre la chambre d'engrenage et le moteur autour de ou des arbres rotatifs (CN110319004A). Le joint d'arbre est prévu pour empêcher les fuites d'hydrogène gazeux de la chambre de pompage le long de l'arbre de rotation vers le moteur, empêchant ainsi la concentration d'hydrogène dans l'unité moteur de devenir une atmosphère explosive.

Cependant, l'hydrogène gazeux peut passer à travers les joints d'arbre. De l'hydrogène diffuse ainsi de la chambre de pompage vers l'unité moteur produisant une augmentation potentiellement dangereuse de la concentration d'hydrogène dans le moteur. Afin de remédier à ce problème, il a été proposé des pompes à hydrogène dans lesquels un flux de gaz est introduit activement dans l'unité moteur pour traverser cette dernière et pour transporter avec lui l'hydrogène qui a potentiellement traversé le joint d'arbre.

Malheureusement, bien que ces pompes permettent de limiter le danger d'explosion due à une augmentation de la concentration d'hydrogène dans l'unité moteur, ces pompes ne garantissent pas que les molécules d'eau qui sont contenues dans la composition au moins partiellement gazeuse à recirculer ne puisse entrer dans la chambre d'entrainement de la pompe ou/et dans l'unité moteur. Une telle contamination de l'intérieur de la pompe est problématique car elle engendre usuellement un disfonctionnement de la pompe.

Une pompe à hydrogène, en particulier une pompe pour la recirculation de l'hydrogène dans les piles à combustible dans le domaine automobile, doit de plus satisfaire à un nombre supplémentaire d'exigences, à savoir (la liste n'est pas exhaustive) :
- répondre à la norme de fuite externe maximale d'hydrogène de 10 Ncm³/h ;
- pouvoir fonctionner sur une large plage de réglage qui peut s'étendre sur un rapport allant jusqu'à 1:20 et, en particulier, atteindre une vitesse maximale de 12'000 tr/min ;
- doit pouvoir fonctionner sur une large plage de températures ambiantes et d'entrée des gaz, en particulier de -40°C à 100°C ;
- doit pouvoir fonctionner, en raison des tensions d'alimentation de la pile à combustible, à des tensions continues nominales de 12 à 800 V, particulièrement de 24 V, de 48 V, de 200 V, de 400V ou de 750 V et doit avoir un rendement élevé ; et
- doit, en raison de la sensibilité des plaques bipolaires de la pile à combustible ou des membranes avec des substances telles que les lubrifiants, utiliser des substances adaptées dans la chambre de pompage et dans l'unité moteur.

Le principal défi réside donc dans le comportement différent de la pile à combustible, comme les différents cycles fonctionnels et pressions de fonctionnement, les températures dans le secteur automobile, la quantité d'eau, etc.

Il existe par conséquent un besoin pour une pompe robuste et flexible, de manière à répondre à toutes les exigences susmentionnées en combinaison et permettant de circonvenir aux problèmes des systèmes connus mentionnés ci-dessus.

### Résumé de l'invention

Un but de la présente invention est donc de proposer un dispositif pour la recirculation d'une composition au moins partiellement gazeuse contenant de l'hydrogène permettant de surmonter les limitations mentionnées préalablement.

Selon l'invention, ces buts sont atteints grâce aux objets des deux revendications indépendantes. Les aspects plus spécifiques de la présente invention sont décrits dans les revendications dépendantes ainsi que dans la description.

De manière plus spécifique et selon un premier aspect, un but de l'invention est atteint grâce à un dispositif pour la recirculation d'une composition au moins partiellement gazeuse contenant de l'hydrogène, où le dispositif est une pompe rotative sèche comprenant un premier arbre rotatif et un deuxième arbre rotatif entraînant respectivement un premier piston à becs et un deuxième piston à becs en rotation dans une chambre de pompage comprenant un orifice d'entrée et un orifice de sortie pour la composition gazeuse, le premier arbre rotatif et le deuxième arbre rotatif étant configurés pour être entrainés en rotation par un système d'entrainement situé dans une chambre d'engrenage, le dispositif comprenant une première paire de joints et une deuxième paire de joints, comprenant chacune un premier joint d'arbre et un deuxième joint d'arbre, la première paire de joints étant prévue autour du premier arbre rotatif et la deuxième paire de joints étant prévue autour du deuxième arbre rotatif entre la chambre de pompage et la chambre d'engrenage, le dispositif comprenant une chambre d'égalisation de pression qui est en connexion fluidique avec un interstice situé entre le premier joint d'arbre et le deuxième joint d'arbre de la première et de la deuxième paire de joints d'arbre pour réguler la pression dans l'interstice, où la chambre d'engrenage est en connexion fluidique avec l'interstice, et où la chambre de pompage est en connexion fluidique avec le premier joint d'arbre de la première paire de joints d'arbre et avec le premier joint d'arbre de la deuxième paire de joints d'arbre par l'intermédiaire d'une chambre d'atténuation de pulsations.

Un dispositif selon la présente invention permet que la pression agissant sur les deux côtés des joints d'arbre, qui assurent l'étanchéité de la chambre de pompage par rapport à la chambre d'engrenage, soit égalisée. Grâce à l'égalisation de cette pression, la force de frottement entre les joints d'arbre et les arbres rotatifs autour desquels ils sont montés reste toujours la même ce qui permet d'éviter une usure prématurée des joints d'arbre et donc la contamination de la chambre d'engrenage avec des molécules d'eau sous forme gazeuse ou liquide et/ou la contamination de la chambre de pompage avec des molécules du liquide lubrifiant présent dans la chambre d'engrenage. De manière avantageuse, la première paire de joints est en fluoroelastomer, par exemple en Viton, ce qui rend ces joints résistants à l'huile, et la deuxième paire de joints en polytétrafluoroéthylène (PTFE), ce qui rends ces joints résistants aux substances présentes dans le processus de création d'électricité dans une pile à combustible par exemple l'eau, l'hydrogène et l'azote.

Dans un premier mode de réalisation préféré de la présente invention, au moins un des joints d'arbre parmi le premier joint d'arbre de la première paire de joint d'arbre, le deuxième joint d'arbre de la première paire de joint d'arbre, le premier joint d'arbre de la deuxième paire de joints d'arbre et le deuxième joint d'arbre de la deuxième paire de joints d'arbre est un joint à lèvre. Grâce à l'utilisation d'un joint à lèvre, le dispositif selon la présente invention peut être mis en œuvre de manière particulièrement simple. De plus, l'utilisation d'un joint à lèvre permet une étanchéité maximale, car la pression de la lèvre sur l'arbre s'ajuste en fonction de la pression régnant autour de la lèvre.

Dans un premier mode de réalisation préféré de la présente invention, la connexion fluidique entre l'interstice et la chambre d'engrenage est effectuée par l'intermédiaire d'un canal d'égalisation de pression prévu dans le premier arbre rotatif et/ou dans le deuxième arbre rotatif. Ceci permet de facilement égaliser la pression entre l'interstice présent entre les joints d'arbre des deux paires de joints et la chambre d'engrenage.

Dans un autre mode de réalisation préféré de la présente invention, le dispositif comprend un filtre à liquide lubrifiant entre le canal d'égalisation de pression et la chambre d'engrenage. Grâce au filtre à liquide lubrifiant, il est possible d'éviter que du liquide lubrifiant puisse entrer dans le canal d'égalisation de pression et ainsi se propager jusque dans la chambre de pompage.

Dans un mode de réalisation préféré suivant de la présente invention, une entrée de régulation est prévue pour réguler la pression dans la chambre d'égalisation de pression depuis l'extérieur du dispositif. Il est ainsi possible d'introduire dans la chambre d'égalisation de pression un gaz, par exemple de l'air, de l'azote, de l'hélium, de l'hydrogène, du néon, de l'argon, du krypton, du xénon ou un mélange de ceux-ci, afin de réguler la pression dans cette chambre depuis l'extérieur du dispositif.

Dans encore un autre mode de réalisation préféré de la présente invention, la chambre d'atténuation de pulsations est en connexion fluidique avec la chambre d'égalisation de pression par l'intermédiaire d'une membrane perméable à l'hydrogène gazeux mais imperméable au moins aux molécules d'eau sous forme liquide et gazeuse. La connexion fluidique entre la chambre d'atténuation de pulsations et l'interstice permet une auto-égalisation de la pression entre la pression présente dans l'interstice, la chambre d'atténuation de pulsations et la chambre d'engrenage. Ainsi, il n'est pas nécessaire de réguler activement la pression dans l'interstice dans ce mode de réalisation. De plus, la présence de la membrane semi-perméable permet de filtrer les molécules d'eau et de réduire le risque d'une contamination de la chambre d'engrenage et/ou une contamination de la chambre de pompage par du liquide lubrifiant de la chambre d'engrenage.

Dans un autre mode de réalisation préféré de la présente invention, la connexion fluidique entre la chambre d'atténuation de pulsations et la chambre de pompage a au moins partiellement la forme d'un labyrinthe. Ceci permet d'atténuer et d'égaliser efficacement les pulsations qui sont créés par les cycles de compression dans la chambre de pompage. Cela permet ainsi de garantir que la pression agissant sur les premiers joints d'arbre de la première et deuxième paire de joints reste essentiellement constante lors de l'utilisation du dispositif.

Dans un mode de réalisation préféré suivant de la présente invention, la chambre d'atténuation de pulsations est en connexion fluidique avec une sortie d'évacuation. Ceci permet d'évacuer des condensats, en particulier de l'eau, qui se sont formés dans la chambre d'atténuation de pulsations.

Dans un autre mode de réalisation préféré de la présente invention, l'orifice d'entrée de la chambre de pompage est orienté de façon à permettre une évacuation d'un liquide sous l'effet de la gravité. Ceci est particulièrement avantageux pour éviter qu'un réservoir d'eau se forme dans la chambre de pompage quand le dispositif est à l'arrêt. Un tel réservoir d'eau peut geler et ainsi empêcher un redémarrage du dispositif. L'évacuation du liquide sous l'effet de la gravité permet une conception simple puisqu'elle ne requiert pas nécessairement d'élément supplémentaire « actif ».

Dans un encore autre mode de réalisation préféré de la présente invention, la chambre d'engrenage et/ou la chambre de pompage est prévue dans un matériau résistant à l'hydrogène ou est revêtue d'un matériau résistant à l'hydrogène. Ceci permet d'augmenter la durée de vie du dispositif.

Dans des autres modes de réalisation préférés de la présente invention, le dispositif est configuré pour être utilisé dans des piles à combustibles pour véhicules automobiles et est en particulier configuré :
- pour permettre une fuite externe maximale d'hydrogène de 10 Ncm³/h ;
- pour élever la pression du mélange de gaz pompé à l'entrée de la pile à combustible dans une plage de pressions allant jusqu'à 15 bar, particulièrement de 1,5 à 5 bar absolue
- pour pouvoir être entrainé sur une plage de contrôle qui s'étend jusqu'à 12'000 rotations par minutes à un rapport de 1:20 ;
- pour pouvoir fonctionner dans une plage de température ambiante et d'entrée de la composition au moins partiellement gazeuse entre -40°C à 100°C ; et/ou
- pour pouvoir fonctionner à une tension électrique continue nominale de 12 à 800 V, particulièrement de 24 V, de 48 V, de 200 V, de 400 V ou de 750 V.

Selon un deuxième aspect, un but de l'invention est atteint grâce à un système de pile à combustible comprenant un réservoir de composition gazeuse comprenant au moins partiellement de l'hydrogène, le réservoir étant relié à une entrée d'une pile à combustible, où le système comprend un dispositif pour la recirculation selon la présente invention, une sortie de la pile à combustible étant reliée à l'orifice d'entrée du dispositif pour la recirculation et l'orifice de sortie du dispositif pour la recirculation étant relié à l'entrée de la pile à combustible.

Grâce à un tel système, la pile combustible peut être fournie en composition gazeuse non seulement par l'intermédiaire du réservoir mais également par l'intermédiaire du dispositif pour la recirculation. Ainsi, l'hydrogène non-consommé dans la pile à combustible est réintroduit dans la pile à combustible, limitant les pertes d'hydrogènes et donc augmentant l'efficacité du système.

Dans un premier mode de réalisation préféré de cet aspect de la présente invention, le système comprend un séparateur d'eau en connexion fluidique avec la sortie de la pile à combustible et avec l'orifice d'entrée du dispositif pour la recirculation. Grâce au séparateur d'eau, il est possible d'extraire l'eau de la composition gazeuse sortant de la pile à combustible avant que cette composition ne soit introduite dans le dispositif pour la recirculation. Ceci permet d'éviter qu'une trop grande quantité d'eau ne soit introduite dans le dispositif pour la recirculation.

Dans un deuxième mode de réalisation préféré de cet aspect de la présente invention, le système comprend un clapet de décharge en connexion fluidique avec la sortie de décharge du séparateur d'eau. Le clapet de décharge permet d'évacuer l'eau tout en évitant les retours. Le clapet comprend avantageusement un capteur qui permet de mesure la quantité d'eau dans le séparateur d'eau. Lorsqu'un certain niveau d'eau est atteint, le clapet de décharge est ouvert et l'eau est évacuée.

Dans un autre mode de réalisation préféré de cet aspect de la présente invention, l'entrée de régulation du dispositif pour la recirculation est en connexion fluidique avec le réservoir. Ceci permet d'introduire le gaz contenu dans le réservoir dans le dispositif pour la recirculation et d'égaliser la pression agissant sur les joints d'arbres de ce dispositif. En égalisant la pression, une usure prématurée des joints peut être évitée.

Dans encore un autre mode de réalisation préféré de cet aspect de la présente invention, la sortie d'évacuation du dispositif pour la recirculation est en connexion fluidique avec la sortie de décharge du séparateur d'eau. Ceci permet d'évacuer l'eau qui voudrait se former dans le dispositif pour la recirculation.

### Brève description des dessins

Les particularités et les avantages de la présente invention apparaîtront avec plus de détails dans le cadre de la description qui suit avec un exemple de réalisation donné à titre illustratif et non limitatif en référence aux quatre dessins ci-annexés qui représentent :
- la figure 1 représente une première vue en coupe d'un dispositif pour la recirculation d'une composition au moins partiellement gazeuse contenant de l'hydrogène selon un premier mode de réalisation préféré ;
- la figure 1a présente un détail de la figure 1 ;
- la figure 2 représente une vue de face d'un dispositif selon le premier mode de réalisation préféré ;
- la figure 3 représente une deuxième vue en coupe d'un dispositif selon le premier mode de réalisation préféré ;
- la figure 4 représente une troisième vue en coupe d'un dispositif selon le premier mode de réalisation préféré ;
- la figure 5 présente un détail de la figure 4 ;
- la figure 6 représente une vue de côté d'un dispositif selon le premier mode de réalisation préféré ;
- la figure 7 représente une quatrième vue en coupe d'un dispositif selon le premier mode de réalisation préféré ;
- la figure 8 présente un détail de la figure 7 ;
- la figure 9 représente une première vue en coupe d'un dispositif pour la recirculation d'une composition au moins partiellement gazeuse contenant de l'hydrogène selon un deuxième mode de réalisation préféré ;
- la figure 10 présente un détail de la figure 9 ;

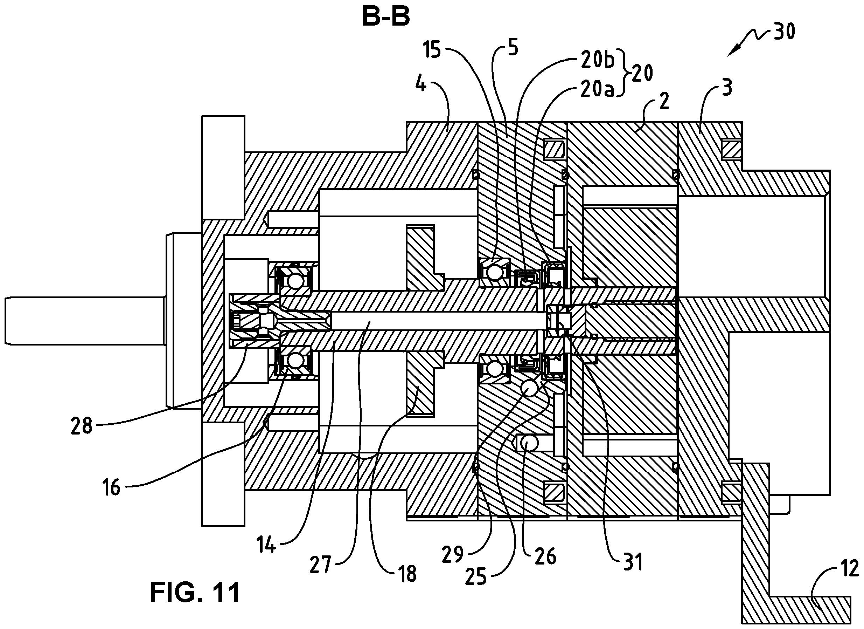

- la figure 11 représente une deuxième vue en coupe d'un dispositif selon le deuxième mode de réalisation préféré ;
- la figure 12 illustre schématiquement un système de pile à combustible selon un premier mode de réalisation de la présente invention ;
- la figure 13 illustre schématiquement un système de pile à combustible selon un deuxième mode de réalisation de la présente invention ;
- la figure 14 illustre schématiquement un système de pile à combustible selon un troisième mode de réalisation de la présente invention ;
- la figure 15 illustre schématiquement un système de pile à combustible selon un quatrième mode de réalisation de la présente invention ; et
- la figure 16 illustre schématiquement un système de pile à combustible selon un cinquième mode de réalisation de la présente invention ; et
- la figure 17 illustre schématiquement un système de pile à combustible selon un sixième mode de réalisation de la présente invention.

### Description détaillée des modes de réalisation préférés de l'invention

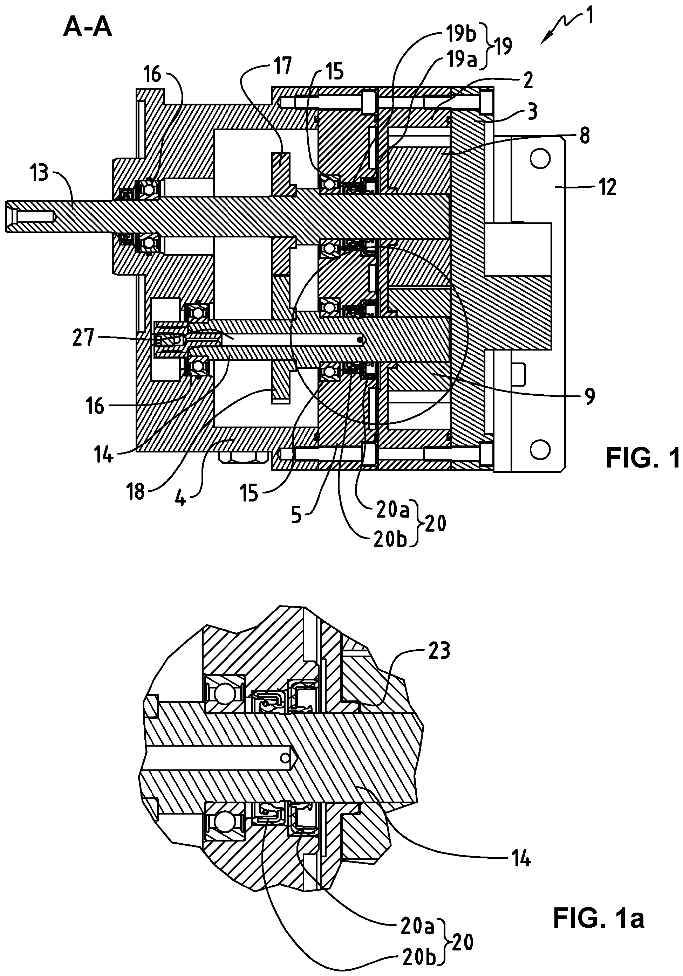

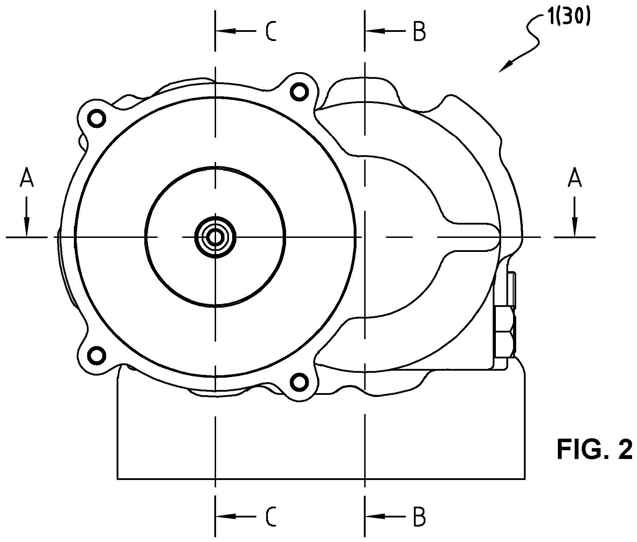

La figure 1 présente une vue en coupe selon la ligne A-A (cf. figure 2) d'un dispositif 1 pour la recirculation d'une composition au moins partiellement gazeuse contenant de l'hydrogène selon un premier mode de réalisation préféré de la présente invention. Le dispositif 1, ici sous la forme d'une pompe sèche à becs, est composée de plusieurs sous-unités qui sont reliées entre elles de manière amovible, à savoir, dans l'exemple de construction illustré, une chambre de pompage 2 avec un couvercle de chambre de pompage 3 et une chambre d'engrenage 4 avec un couvercle de chambre d'engrenage 5.

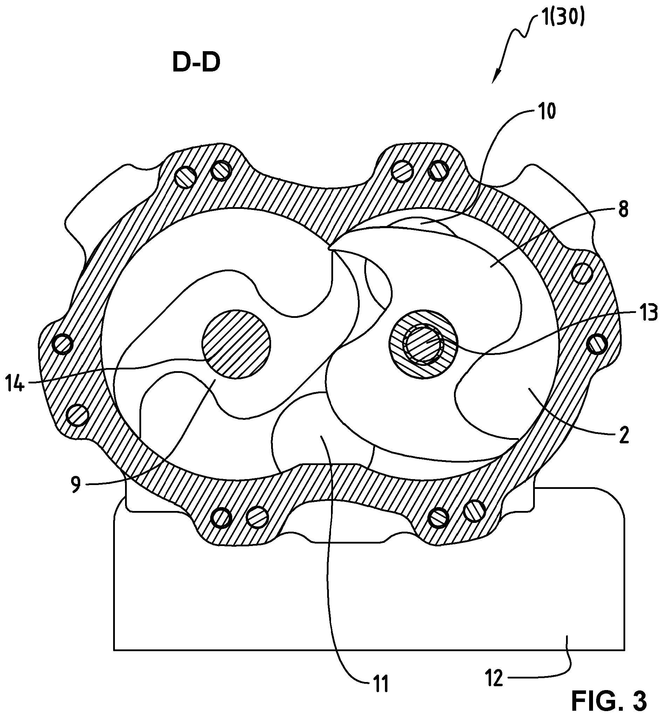

La chambre de pompage 2 est prévue pour recevoir deux pistons à becs 8 et 9 (cf. figure 3) entrainés en rotation par un premier arbre rotatif 13 et un deuxième arbre rotatif 14 supportés par des paliers 15 et 16, respectivement situés dans le couvercle de chambre d'engrenage 5 et dans la chambre d'engrenage 4. L'arbre rotatif 13 du piston à becs 8 représente l'arbre d'entrée, tandis que l'arbre 14 du piston à becs 9 forme l'arbre de sortie. L'arbre rotatif 13 est configuré pour être entraîné par un moteur électrique d'une façon connue pour un homme du métier et qui ne sera ici pas détaillée.

L'entraînement du deuxième arbre rotatif 14 du piston à becs 9 ainsi que sa synchronisation nécessaire avec le premier arbre rotatif 13 du piston à becs 8 s'effectue au moyen d'un système d'entrainement comprenant deux roues dentées 17 et 18 qui s'engrènent entre les deux paliers 15 et 16. Afin de permettre un entrainement optimal de la roue dentée 18 par la roue dentée 17, la chambre d'engrenage 4 contient un liquide lubrifiant. Il est avantageux, pour l'utilisation du dispositif 1 pour la recirculation d'une composition contenant de l'hydrogène, de prévoir que le liquide lubrifiant soit adapté pour ce domaine d'application. Il est en particulier avantageux de prévoir un liquide lubrifiant ne réagissant pas avec l'hydrogène et compatible avec les matériaux utilisés pour les membranes d'une pile à combustible.

Comme illustré dans la figure 3, les pistions 8 et 9 sont des pistons à becs configurés pour pouvoir être enroulés l'un contre l'autre de telle sorte qu'ils transportent et compriment efficacement la composition gazeuse entrant par un orifice d'entrée 11 et sortant par l'orifice de sortie 10. L'orifice d'entrée 11 est avantageusement orienté de telle façon qu'un liquide présent dans la chambre de pompage 2 puisse s'écouler hors de cette chambre sous l'effet de la gravité lorsque le dispositif 1 est orienté comme dans la figure 1, c'est-à-dire lorsqu'il repose sur le pied 12.

Comme mentionné ci-dessus, il est important que le dispositif de recirculation 1 soit configuré de telle façon à éviter que de l'eau sous forme liquide ou gazeuse ne puisse entrer dans la chambre d'engrenage 4 et/ou que du liquide lubrifiant puisse contaminer la chambre de pompage 2. En effet, de l'eau pourrait réagir avec le liquide lubrifiant présent dans la chambre d'engrenage 4 et/ou empêcher un entrainement optimal des roues dentées 17 et 18 et/ou des paliers 15 et 16 ce qui à terme voudrait mener à un disfonctionnement du dispositif 1. De plus, une contamination de la chambre de pompage 2 avec du liquide lubrifiant pourrait conduire à une diminution du rendement de la pile à combustible à laquelle est reliée le dispositif 1.

Afin de séparer la chambre de pompage de la chambre d'engrenage d'une pompe à becs, il est connu dans l'art antérieur d'utiliser un joint d'arbre en caoutchouc positionné entre la chambre de pompage et la chambre d'engrenage. Ceci permet normalement d'éviter que de l'eau contenue dans la composition partiellement gazeuse fournie à une pile combustible ne puisse entrer dans la chambre d'engrenage et que du liquide lubrifiant ne puisse contaminer la chambre de pompage.

Dans une exécution préférentielle, les joints d'arbre normalement positionnés autour des arbres rotatifs entrainant les pistons à becs sont de type à lèvre de telle manière que la lèvre du joint soit en contact avec l'arbre rotatif et que sous l'effet de l'élasticité de la lèvre une étanchéité optimale soit atteinte. Les joints d'arbre peuvent être d'une nature différente type garniture mécanique, labyrinthe ou autre.

Comme mentionné préalablement, le but de la présente invention est de prévoir un dispositif 1 pour la recirculation d'hydrogène qui soit utilisable dans le domaine des piles à combustible et plus spécialement dans le domaine des piles à combustible pour les véhicules automobiles. Dans ce domaine d'application, la pression de la composition contenant de l'hydrogène à recirculer peut varier énormément, ce qui implique que la pression qui est appliquée sur la lèvre d'un joint d'arbre peut aussi beaucoup varier. Avec une pression importante, une grande force de frottement est créée entre la lèvre des joints et l'arbre rotatif autour duquel ils sont positionnés ce qui amène à une usure rapide de la lèvre. Une lèvre usée ne permet plus d'atteindre l'étanchéité nécessaire et de l'eau sous forme gazeuse ou liquide peut entrer dans la chambre d'engrenage ou du liquide lubrifiant peut contaminer la chambre de pompage.

Afin de remédier à ce problème, le dispositif 1 comprend, comme montré dans les différentes figures, une première paire de joints 19 comprenant un premier joint d'arbre 19a et un deuxième joint d'arbre 19b qui sont placés autour du premier arbre rotatif 13 et une deuxième paire de joints 20 comprenant un premier joint d'arbre 20a et un deuxième joint d'arbre 20b qui sont placés autour du deuxième arbre rotatif 14. Comme mentionné ci-dessus, un joint d'arbre est un joint d'arbre, c'est-à-dire que plus la différence de pression entre les deux côtés du joint et importante plus la lèvre appuie sur l'arbre rotatif autour duquel le joint est positionné. Cela implique qu'avec une différence de pression grandissante, les frottements entre la lèvre du joint et l'arbre augmentent. Une telle augmentation peut provoquer une usure prématurée, et éventuellement une rupture, du joint.

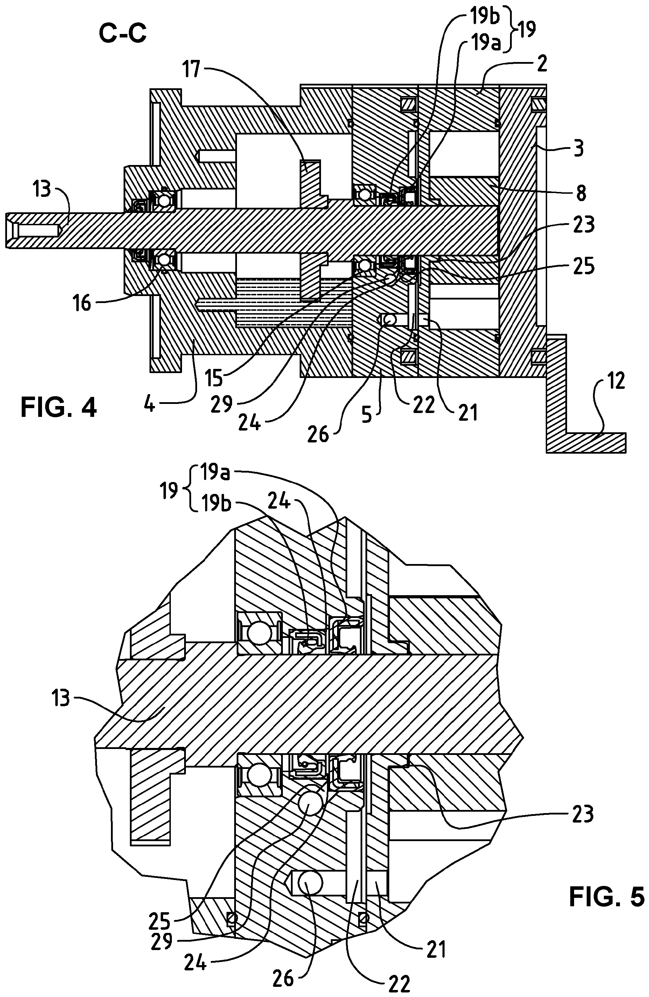

Pour éviter une usure prématurée des joints des paires de joints 19 et 20, le dispositif 1 comprend un système d'égalisation de pression afin que la pression des deux côtés des joints d'arbre puisse être égalisée. Comme illustré dans les figures 4 et 5, le dispositif 1 comprend une chambre d'égalisation de pression 25 qui est en connexion fluidique avec l'interstice 24 présent entre les premier et deuxième joints d'arbre des paires de joints 19 et 20. La pression dans la chambre d'égalisation de pression 25 peut être régulée en y introduisant depuis l'extérieur du dispositif, par l'intermédiaire d'une entrée de régulation 29, un gaz. Ceci permet donc de réguler la pression dans la chambre d'égalisation de pression 25 et l'interstice 22 et donc d'égaliser la pression qui agit sur les deux côtés des joints d'arbre.

Comme on peut le voir dans ces figures, la chambre de pompage 2 est, de plus, en connexion fluidique avec une chambre d'atténuation de pulsations 22 par l'intermédiaire d'un trou 21. La chambre d'atténuation de pulsations 22 est quant à elle en connexion fluidique avec les premiers joints d'arbre 19a et 20a des paires de joints 19 et 20. Grâce à la chambre d'atténuation de pulsations 22, il est possible d'atténuer, et même d'égaliser, les pulsations de pression qui sont créés lors des cycles de pompages dans la chambre de pompage 2 et ainsi de garantir que la pression agissant sur la lèvre des premiers joints d'arbre 19a et 20a reste essentiellement constante pendant l'utilisation du dispositif 1. Ceci est important pour garantir une étanchéité optimale. La connexion fluidique entre la chambre d'atténuation de pulsations 22 et la chambre de pompage 2 a avantageusement la forme d'un labyrinthe 23 de faible passage de gaz, ce qui permet de d'atténuer et même d'égaliser efficacement les pulsations de pressions.

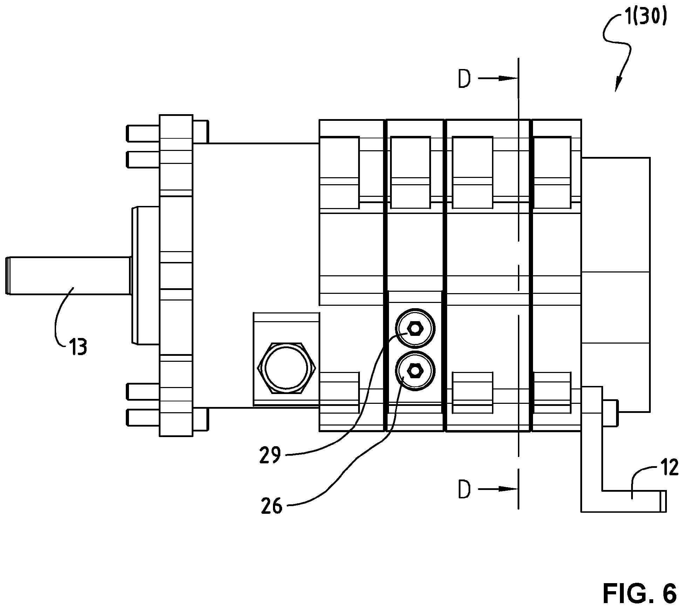

Dû à la connexion fluidique entre la chambre d'atténuation de pulsations 22 et la chambre de pompage 2, il est possible que de l'eau puisse s'accumuler dans la chambre d'atténuation de pulsations 22. Dans ce cas, il est avantageux de prévoir une sortie d'évacuation 26 par laquelle l'eau peut être évacuée (cf. aussi figure 6). De plus, l'eau peut être elle-même réaspirée par le cycle de pompage chambre 2 par le trou de connexion 21. De plus, par l'intermédiaire de l'entrée de régulation 29, un gaz, par exemple de l'air, de l'azote, de l'hélium, de l'hydrogène, du néon, de l'argon, du krypton, du xénon ou un mélange de ceux-ci, peut être introduit dans la chambre d'égalisation de pression 25 et donc dans l'interstice 24 ce qui permet d'égaliser facilement la pression agissant sur les joints d'arbre.

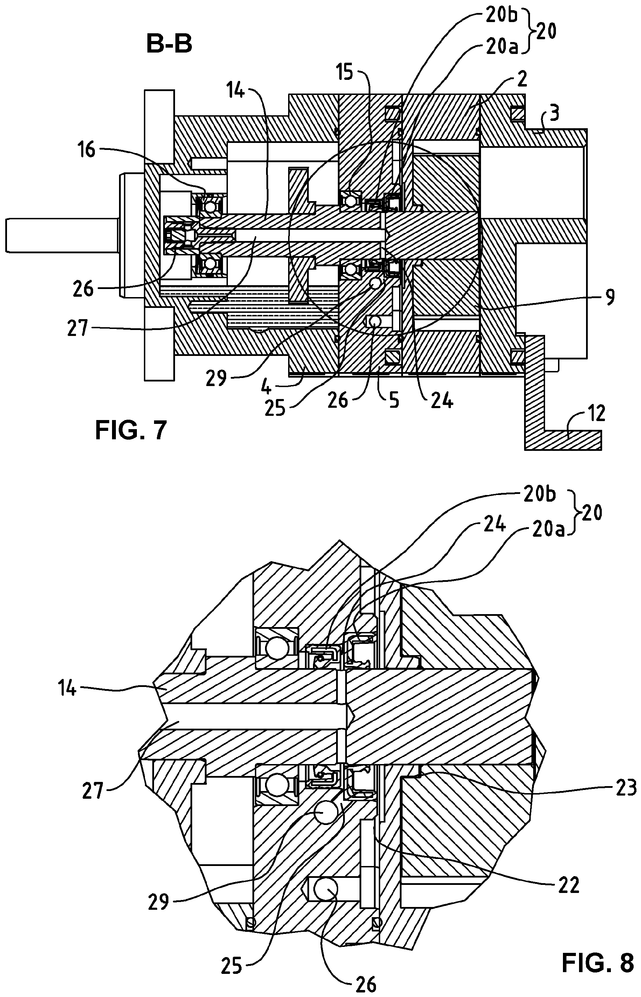

Pour que non seulement les joints 19a et 20a mais aussi les joints 19b et 20b ne s'usent prématurément, le deuxième arbre rotatif 14 comprend un canal d'égalisation de pression 27 qui relie l'interstice 24 à la chambre d'engrenage 4 (cf. figures 7 et 8). Ainsi la pression agissant sur les deux côtés des joints d'arbre 19b et 20b est égalisée ce qui réduit la force de frottement entre les arbres rotatifs et ces joints. Afin d'éviter un refoulement de liquide lubrifiant dans l'interstice 24 par l'intermédiaire du canal 27, le deuxième arbre rotatif 14 comprend à son extrémité dans la chambre d'engrenage un filtre 28 qui permet la diffusion des gaz, mais pas des liquides.

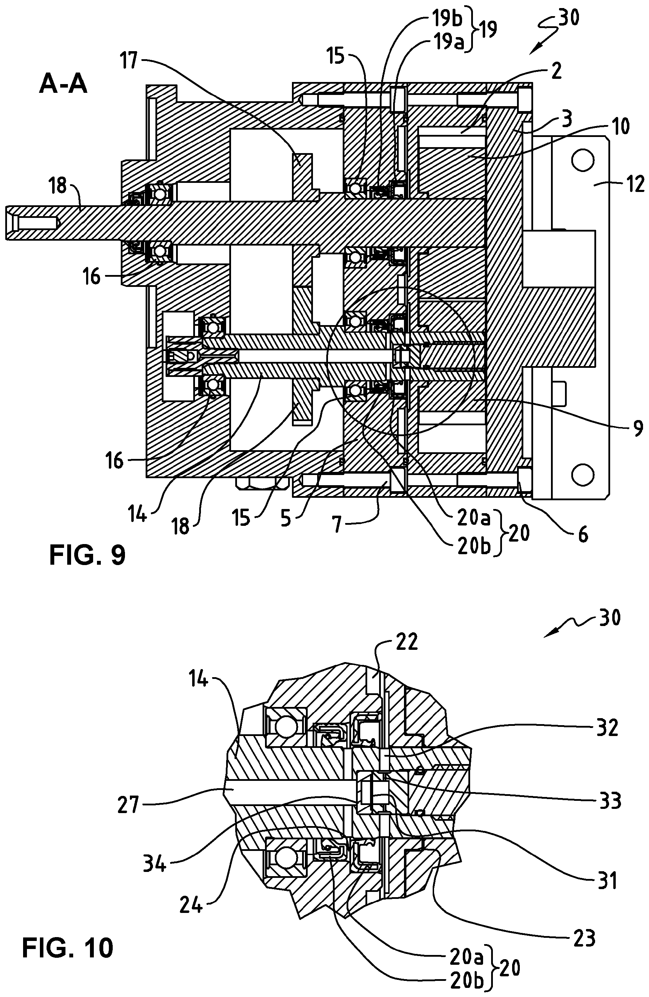

Les figures 9 et 10 présentent une vue en coupe selon la ligne A-A (cf. figure 2) d'un dispositif 30 pour la recirculation d'une composition au moins partiellement gazeuse contenant de l'hydrogène selon un deuxième mode de réalisation préféré de la présente invention. Ici, il sera abstenu de décrire les éléments du dispositif 30 qui sont similaires à ceux du dispositif 1. De plus, les éléments similaires portent le même numéro de référence dans les figures illustrant les deux modes de réalisations.

Dans le dispositif 30, la chambre d'atténuation de pulsations 22 est en connexion fluidique avec la chambre d'égalisation de pression 25 et donc avec l'interstice 24. Ceci permet une auto-égalisation des pressions dans la chambre de pompage 2, dans l'interstice 24 et dans la chambre d'engrenage 4. Dans ce mode de réalisation, il n'est donc pas nécessaire de réguler activement la pression dans la chambre d'égalisation de pression 25. Grâce à la connexion fluidique entre la chambre de pompage 2 et l'interstice 24 par l'intermédiaire de la chambre d'atténuation de pulsations 22, la pression des deux côtés des joints d'arbre 19a et 20a des paires de joints 19 et 20 s'égalise automatiquement.

Avantageusement, la connexion fluidique entre la chambre d'atténuation de pulsations 22 et la chambre d'égalisation de pression 25 se fait par l'intermédiaire d'une membrane semi-perméable 31 à travers laquelle l'hydrogène gazeux peut diffuser mais qui retient l'eau sous forme liquide ou gazeuse ainsi que les liquides lubrifiants. De manière similaire au dispositif 1, la connexion fluidique entre la chambre d'atténuation de pulsations 22 et la chambre de pompage 2 a au moins partiellement la forme d'un labyrinthe 23 ce qui permet d'atténuer et même d'égaliser efficacement les pulsations de pression venant de la chambre de pompage 2. De plus, comme on peut le voir dans la figure 10, la connexion fluidique entre la chambre d'atténuation de pulsations 22 et l'interstice 24 (et donc la chambre d'égalisation de pression 25) se fait avantageusement par l'intermédiaire d'une première paire de trous calibrés 32, d'une deuxième paire de trous calibrés 33 et d'une troisième paire de trous calibrés 34. La taille des trous calibrés 33 permet de contrôler la vitesse d'écoulement de la composition gazeuse le long de la membrane 31. De manière similaire au dispositif 1, une sortie d'évacuation 26 permet d'évacuer l'eau qui voudrait s'accumuler dans la chambre d'atténuation de pulsations 22. Dans le dispositif 30, la sortie d'évacuation 26 est configurée pour évacuer l'eau qui est repoussée sous l'effet de la force centrifuge à travers les trous calibrés 32. Finalement, une entrée de régulation 29 pour réguler la pression dans la chambre d'égalisation de pression 25 depuis l'extérieur du dispositif est également prévue dans ce mode de réalisation.

La présence de la membrane 31 permet de réduire encore plus le risque de diffusion de molécules d'eau dans la chambre d'engrenage 4 et de liquide lubrifiant dans la chambre de pompage 2. Il est important de noter que, de manière similaire au dispositif 1, la pression des deux côtés des joints d'arbre des paires de joints 19 et 20 est égalisée ce qui permet de limiter leur usure. De plus, comme illustré dans la figure 9, le deuxième arbre rotatif 14 du dispositif 30 comprend aussi à une de ses extrémités un filtre 28 qui empêche le refoulement du liquide lubrifiant présent dans la chambre d'engrenage par l'intermédiaire du canal 27.

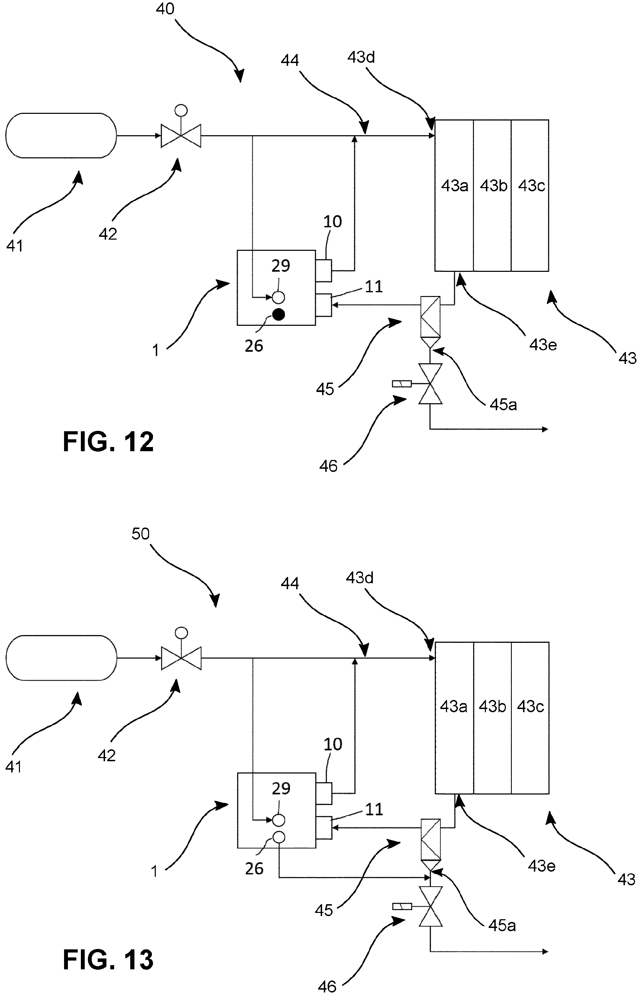

La figure 12 montre un système de pile à combustible 40 selon un premier mode de réalisation de la présente invention. Le système 40 comprend un réservoir d'hydrogène 41, un régulateur de pression 42, une pile à combustible 43 avec une anode 43a, une membrane 43b et une cathode 43c. Le système 40 comprend également un dispositif 1 pour la recirculation de la composition au moins partiellement gazeuse contenant de l'hydrogène selon le premier mode de réalisation de cet aspect de la présente invention. L'orifice de sortie 10 du dispositif 1 est relié au conduit 44 fournissant l'hydrogène gazeux à la pile à combustible 43, ce qui permet de réintroduire l'hydrogène non-consommé dans la pile à combustible. La sortie 43e de la pile à combustible 43 est reliée à un séparateur d'eau 45 qui permet de retirer une majorité de l'eau contenue dans la composition gazeuse sortant de la pile à combustible. Cette eau est déchargée par l'intermédiaire de la sortie de décharge 45a du séparateur d'eau 45 et à travers un clapet de décharge 46. La composition gazeuse dont une grande partie de l'eau a été retirée grâce au séparateur d'eau 45 est introduite dans le dispositif 1 par l'intermédiaire de son orifice d'entrée 11. Le dispositif 1 peut ainsi comprimer la composition gazeuse à la pression nécessaire et la réintroduire dans le conduit 44. Dans ce mode de réalisation, l'entrée de régulation 29 du dispositif 1 est en connexion avec le conduit 44, et donc avec le réservoir 41, ce qui permet l'égalisation de la pression agissant sur les deux côtés des joints d'arbre (non montrés ici) du dispositif 1. Comme illustré dans la figure 12, la sortie d'évacuation 26 est, dans ce mode de réalisation, non utilisée et est de préférence fermée.

La figure 13 montre un système de pile à combustible 50 selon un deuxième mode de réalisation de la présente invention. Le système 40 est équivalent au système 40 présenté dans la figure 12 à l'exception du fait que la sortie d'évacuation 26 est, dans ce mode de réalisation, connectée à la sortie du séparateur d'eau 45. Ceci permet d'évacuer l'eau qui voudrait se former à l'intérieur du dispositif 1.

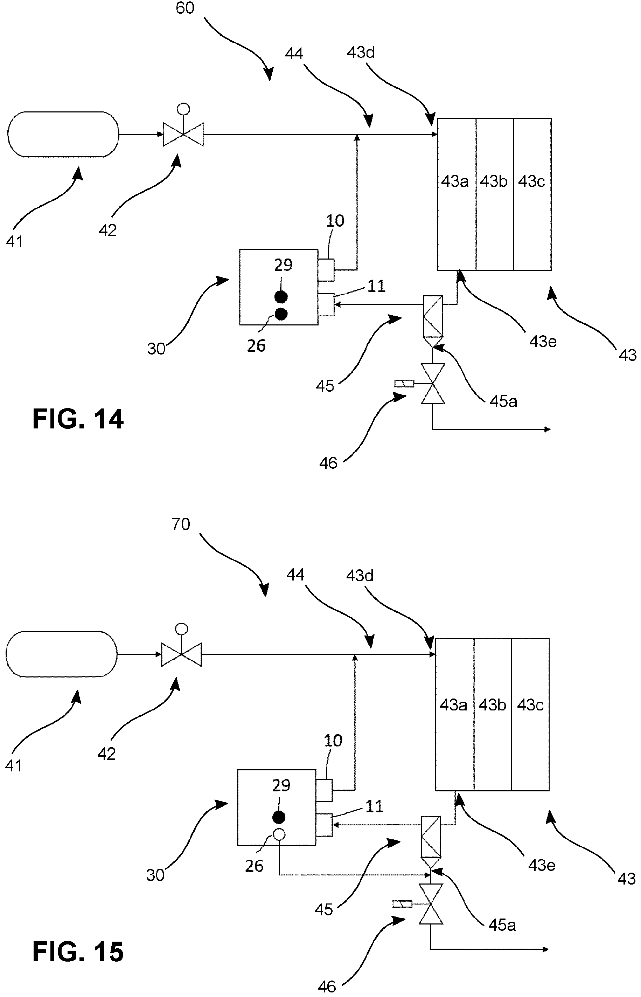

La figure 14 montre un système de pile à combustible 60 selon un troisième mode de réalisation de la présente invention. Le système 60 est équivalent au système 40 présenté dans la figure 12 à l'exception d'une différence importante. Cette différence réside dans le fait que le système 60 comprend un dispositif 30 pour la recirculation de la composition au moins partiellement gazeuse contenant de l'hydrogène selon le deuxième mode de réalisation de cet aspect de la présente invention. Comme mentionné ci-dessus ce mode de réalisation du dispositif de recirculation prévoit un système d'auto-égalisation de la pression agissant sur les deux côtés des joints d'arbre (non montrés ici) du dispositif 30. Grâce à ce système d'auto-égalisation, il n'est pas nécessaire d'introduire un gaz par l'intermédiaire de l'entrée de régulation 29 afin d'égaliser la pression agissant sur les joints d'arbre. Ainsi, dans le mode de réalisation de la figure 14, l'entrée de régulation 29 n'est pas connectée au conduit 45. Il est important de noter que dans ce mode de réalisation, il serait également possible de prévoir une connexion entre l'entrée de régulation 29 et le conduit 44 afin de pouvoir si nécessaire introduire un gaz dans le dispositif 30. Ceci serait par exemple nécessaire, si le dispositif d'auto-égalisation ne voudrait pas fonctionner comme désiré.

La figure 15 montre un système de pile à combustible 70 selon un quatrième mode de réalisation de la présente invention. Le système 70 est équivalent au système 60 présenté dans la figure 14 à l'exception du fait que la sortie d'évacuation 26 est, dans ce mode de réalisation, connectée à la sortie du séparateur d'eau 45. Ceci permet d'évacuer l'eau qui voudrait se former à l'intérieur du dispositif 30.

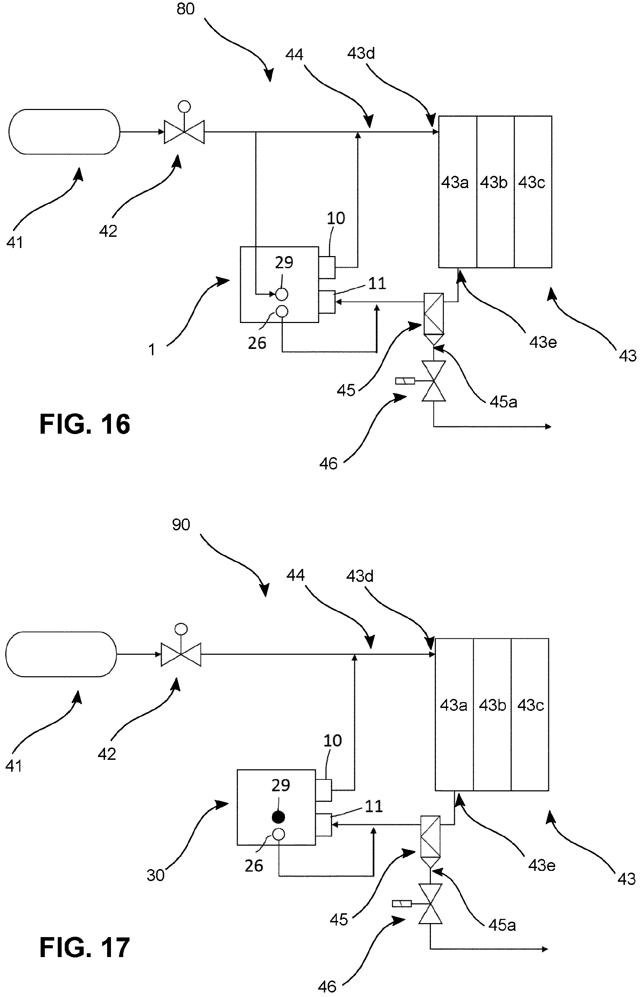

Les figures 16 et 17 montrent quant à elles un système de pile à combustible 80, 90 selon un cinquième et un sixième mode de réalisation de la présente invention. Dans ces modes de réalisation, la sortie d'évacuation 26 est en connexion fluidique avec l'orifice d'entrée 11 du dispositif pour la recirculation 1, respectivement du dispositif pour la recirculation 30. Ceci permet d'évacuer l'eau qui voudrait se former à l'intérieur du dispositif pour la recirculation et de réintroduire cette eau dans la pile à combustible 43 par l'intermédiaire du dispositif pour la recirculation1,30 et du conduit 44.

**Il** est évident que la présente invention est sujette à de nombreuses variations quant à sa mise en œuvre. Bien qu'un mode de réalisation non limitatif ait été décrit à titre d'exemple, on comprend bien qu'il n'est pas concevable d'identifier de manière exhaustive toutes les variations possibles. **Il** est bien sûr envisageable de remplacer un moyen décrit par un moyen équivalent sans sortir du cadre de la présente invention. Toutes ces modifications font partie des connaissances communes d'un homme du métier dans le domaine des pompes et circulateurs.

## Revendications

1. Dispositif (1, 30) pour la recirculation d'une composition au moins partiellement gazeuse contenant de l'hydrogène,
le dispositif (1, 30) est une pompe rotative sèche comprenant un premier arbre rotatif (13) et un deuxième arbre rotatif (14) entraînant respectivement un premier piston à becs (8) et un deuxième piston à becs (9) en rotation dans une chambre de pompage (2) comprenant un orifice d'entrée (11) et un orifice de sortie (10) pour la composition gazeuse, le premier arbre rotatif (13) et le deuxième arbre rotatif (14) étant configurés pour être entrainés en rotation par un système d'entrainement (17,18) situé dans une chambre d'engrenage (4),
**caractérisé en ce que** le dispositif (1, 30) comprend une première paire de joints (19) et une deuxième paire de joints (20), comprenant chacune un premier joint d'arbre (19a, 20a) et un deuxième joint d'arbre (19b, 20b), la première paire de joints (19) étant prévue autour du premier arbre rotatif (13) et la deuxième paire de joints (20) étant prévue autour du deuxième arbre rotatif (14) entre la chambre de pompage (2) et la chambre d'engrenage (4),
**en ce que** le dispositif (1, 30) comprend une chambre d'égalisation de pression (25) qui est en connexion fluidique avec un interstice (24) présent entre le premier joint d'arbre (19a, 20a) et le deuxième joint d'arbre (19b, 20b) de la première et de la deuxième paire de joints d'arbre (19, 20) pour réguler la pression dans l'interstice (24),
**en ce que** la chambre d'engrenage (4) est en connexion fluidique avec l'interstice (24), et
**en ce que** la chambre de pompage (2) est en connexion fluidique avec le premier joint d'arbre (19a) de la première paire de joint d'arbre (19) et avec le premier joint d'arbre (20a) de la deuxième paire de joints d'arbre (20) par l'intermédiaire d'une chambre d'atténuation de pulsations (22).

2. Dispositif (1, 30) selon la revendication 1, dans lequel au moins un des joints d'arbres parmi le premier joint d'arbre (19a) de la première paire de joint d'arbre (19), le deuxième joint d'arbre (19b) de la première paire de joint d'arbre (19), le premier joint d'arbre (20a) de la deuxième paire de joints d'arbre (20) et le deuxième joint d'arbre (20b) de la deuxième paire de joints d'arbre (20) est un joint à lèvre.

3. Dispositif (1, 30) selon une des revendications 1 ou 2, dans lequel la connexion fluidique entre l'interstice (24) et la chambre d'engrenage (4) est effectuée par l'intermédiaire d'un canal d'égalisation de pression (27) prévu dans le premier arbre rotatif (13) et/ou dans le deuxième arbre rotatif (14).

4. Dispositif (1, 30) selon la revendication 3, comprenant un filtre à liquide lubrifiant (28) entre le canal d'égalisation de pression (27) et la chambre d'engrenage (4).

5. Dispositif (1, 30) selon l'une quelconque des revendications précédentes, dans lequel une entrée de régulation (29) est prévue pour réguler la pression dans la chambre d'égalisation de pression (25) depuis l'extérieur du dispositif.

6. Dispositif (30) selon l'une quelconque des revendications précédentes, dans lequel la chambre d'atténuation de pulsations (22) est en connexion fluidique avec la chambre d'égalisation de pression par l'intermédiaire d'une membrane (31) perméable à l'hydrogène gazeux mais imperméable au moins aux molécules d'eau sous forme liquide et gazeuse.

7. Dispositif (1,30) selon l'une quelconque des revendications précédentes, dans lequel la connexion fluidique entre la chambre d'atténuation de pulsations (22) et la chambre de pompage (2) a au moins partiellement la forme d'un labyrinthe.

8. Dispositif (1, 30) selon l'une quelconque des revendications précédentes, dans lequel la chambre d'atténuation de pulsations (22) est en connexion fluidique avec une sortie d'évacuation (26).

9. Dispositif (1, 30) selon l'une quelconque des revendications précédentes, dans lequel l'orifice d'entrée (11) de la chambre de pompage (2) est orienté de façon à permettre une évacuation d'un liquide sous l'effet de la gravité.

10. Dispositif (1, 30) selon l'une quelconque des revendications précédentes et configuré pour élever la pression de la composition au moins partiellement gazeuse contenant de l'hydrogène à l'entrée d'une pile à combustible dans une plage de pressions allant jusqu'à 15 bar, particulièrement de 1,5 à 5 bar absolue.

11. Système de pile à combustible (40, 50, 60, 70) comprenant un réservoir de composition gazeuse comprenant au moins partiellement de l'hydrogène (41), le réservoir (41) étant relié à une entrée (43d) d'une pile à combustible (43),
**caractérisé en ce que**
le système comprend un dispositif (1,30) pour la recirculation selon une des revendications 1 à 15, une sortie (43e) de la pile à combustible (43) étant reliée à l'orifice d'entrée (11) du dispositif pour la recirculation (1,30) et l'orifice de sortie (10) du dispositif pour la recirculation (1,30) étant relié à l'entrée (43d) de la pile à combustible (43).

12. Système de pile à combustible (40, 50, 60, 70, 80, 90) selon la revendication 11, comprenant un séparateur d'eau (45) en connexion fluidique avec la sortie de la pile à combustible (43) et avec l'orifice d'entrée du dispositif (1,30) pour la recirculation.

13. Système de pile à combustible (40, 50, 60, 70, 80, 90) selon la revendication 12, comprenant un clapet de décharge (46) en connexion fluidique avec la sortie de décharge (45a) du séparateur d'eau (45).

14. Système de pile à combustible (40, 50, 60, 70, 80, 90) selon une quelconque des revendications 11 à 13, dans lequel l'entrée de régulation (29) du dispositif pour la recirculation (1,30) est en connexion fluidique avec le réservoir (41).

15. Système de pile à combustible (40, 50, 60, 70, 80, 90) selon une quelconque des revendications 11 à 14, dans lequel la sortie d'évacuation (26) du dispositif pour la recirculation (1,30) est en connexion fluidique avec la sortie de décharge (45a) du séparateur d'eau (45).

## Patentansprüche

1. Vorrichtung (1, 30) zur Umwälzung einer zumindest teilweise gasförmigen, wasserstoffhaltigen Zusammensetzung,
wobei die Vorrichtung (1, 30) eine Trocken-Rotationspumpe ist, die eine erste rotierende Welle (13) und eine zweite rotierende Welle (14) umfasst, die einen ersten Kolben mit Klauen (8) beziehungsweise einen zweiten Kolben mit Klauen (9) innerhalb einer Pumpkammer (2) mit einer Einlassöffnung (11) und einer Auslassöffnung (10) für die gasförmige Zusammensetzung in Rotation versetzen, wobei die erste rotierende Welle (13) und die zweite rotierende Welle (14) derart konfiguriert sind, dass sie von einem Antriebssystem (17, 18) in Rotation versetzt werden, welches Antriebssystem (17, 18) in einer Getriebekammer (4) angeordnet ist,
**dadurch gekennzeichnet, dass** die Vorrichtung (1, 30) ein erstes Dichtungspaar (19) und ein zweites Dichtungspaar (20) umfasst, die jeweils eine erste Wellendichtung (19a, 20a) und eine zweite Wellendichtung (19b, 20b) umfassen, wobei das erste Dichtungspaar (19) zwischen der Pumpkammer (2) und der Getriebekammer (4) um die erste rotierende Welle (13) angeordnet ist und das zweite Dichtungspaar (20) zwischen der Pumpkammer (2) und der Getriebekammer (4) um die zweite rotierende Welle (14) angeordnet ist und, dass
die Vorrichtung (1, 30) eine Druckausgleichskammer (25) umfasst, die fluidleitend mit einem Spalt (24), der zwischen der ersten Wellendichtung (19a, 20a) und der zweiten Wellendichtung (19b, 20b) des ersten und zweiten Dichtungspaars (19, 20) angeordnet ist, verbunden ist, um den Druck in dem Spalt (24) zu regulieren, und dass
die Getriebekammer (4) fluidleitend mit dem Spalt (24) verbunden ist, und dass
die Pumpkammer (2) durch eine Pulsationsdämpfungskammer (22) fluidleitend mit der ersten Wellendichtung (19a) des ersten Dichtungspaars (19) und mit der ersten Wellendichtung (20a) des zweiten Dichtungspaars (20) verbunden ist.

2. Vorrichtung (1, 30) nach Anspruch 1, wobei zumindest eine der ersten Wellendichtung (19a) des ersten Dichtungspaars (19), der zweiten Wellendichtung (19b) des ersten Dichtungspaars (19), der ersten Wellendichtung (20a) des zweiten Dichtungspaars (20) und der zweiten Wellendichtung (20b) des zweiten Dichtungspaars (20) eine Lippendichtung ist.

3. Vorrichtung (1, 30) nach einem der Ansprüche 1 oder 2, wobei die fluidleitende Verbindung zwischen dem Spalt (24) und der Getriebekammer (4) durch einen Druckausgleichskanal (27) in der ersten rotierenden Welle (13) und/oder in der zweiten rotierenden Welle (14) bewirkt wird.

4. Vorrichtung (1, 30) nach Anspruch 3, wobei die Vorrichtung (1, 30) einen Schmierstofffilter (28) zwischen dem Druckausgleichskanal (27) und der Getriebekammer (4) umfasst.

5. Vorrichtung (1, 30) nach einem der vorhergehenden Ansprüche, wobei ein Regulierungseinlass (29) bereitgestellt ist, um den Druck in der Druckausgleichskammer (25) von ausserhalb der Vorrichtung zu kontrollieren.

6. Vorrichtung (30) nach einem der vorhergehenden Ansprüche, wobei die Pulsationsdämpfungskammer (22) über eine Membran (31), welche Membran durchlässig für Wasserstoffgas jedoch undurchlässig zumindest für Wassermoleküle in gasförmiger oder flüssiger Form ist, fluidleitend mit der Druckausgleichskammer verbunden ist.

7. Vorrichtung (1, 30) nach einem der vorhergehenden Ansprüche, wobei die fluidleitende Verbindung zwischen der Pulsationsdämpfungskammer (22) und der Pumpkammer (2) zumindest teilweise die Form eines Labyrinths aufweist.

8. Vorrichtung (1, 30) nach einem der vorhergehenden Ansprüche, wobei die Pulsationsdämpfungskammer (22) fluidleitend mit einem Abflussauslass (26) verbunden ist.

9. Vorrichtung (1, 30) nach einem der vorhergehenden Ansprüche, wobei die Einlassöffnung (11) der Pumpkammer (2) derart orientiert ist, dass eine Drainage von Flüssigkeit durch den Einfluss der Schwerkraft ermöglicht wird.

10. Vorrichtung (1, 30) nach einem der vorhergehenden Ansprüche und eingerichtet, den Druck einer zumindest teilweise gasförmigen, wasserstoffhaltigen Zusammensetzung am Einlass einer Brennstoffzelle in einem Bereich von bis zu 15 bar, vorzugsweise von 1.5 bis 5 bar absolut, zu erhöhen.

11. Brennstoffzellensystem (40, 50, 60, 70) mit einem Reservoir einer gasförmigen Zusammensetzung (41), die zumindest teilweise Wasserstoff umfasst, welches Reservoir (41) mit einem Einlass (43d) einer Brennstoffzelle (43) verbunden ist und welches System
**dadurch gekennzeichnet ist, dass**
das System eine Vorrichtung zur Umwälzung (1, 30) nach einem der Ansprüche 1 bis 15 umfasst, wobei ein Auslass (43e) der Brennstoffzelle (43) mit der Einlassöffnung (11) der Vorrichtung zur Umwälzung (1, 30) verbunden ist und die Auslassöffnung (10) der Vorrichtung zur Umwälzung (1, 30) mit dem Einlass (43d) der Brennstoffzelle (43) verbunden ist.

12. Brennstoffzellensystem (40, 50, 60, 70, 80, 90) nach Anspruch 11, umfassend einen Wasserabscheider (45), der fluidleitend mit dem Auslass der Brennstoffzelle (43) und mit der Einlassöffnung der Vorrichtung zur Umwälzung (1, 30) verbunden ist.

13. Brennstoffzellensystem (40, 50, 60, 70, 80, 90) nach Anspruch 12, umfassend ein Entlastungsventil (46), das fluidleitend mit dem Abflussauslass (45a) des Wasserabscheiders (45) verbunden ist.

14. Brennstoffzellensystem (40, 50, 60, 70, 80, 90) nach einem der Ansprüche 11 bis 13, wobei der Regulierungseinlass (29) der Vorrichtung zur Umwälzung (1, 30) fluidleitend mit dem Reservoir (41) verbunden ist.

15. Brennstoffzellensystem (40, 50, 60, 70, 80, 90) nach einem der Ansprüche 11 bis 14, wobei der Abflussauslass (26) der Vorrichtung zur Umwälzung (1, 30) fluidleitend mit dem Abflussauslass (45a) des Wasserabscheiders (45) verbunden ist.

## Claims

1. Device (1, 30) for the recirculation of an at least partially gaseous composition containing hydrogen,
the device (1, 30) is a dry rotary pump comprising a first rotating shaft (13) and a second rotating shaft (14) respectively driving a first piston with claws (8) and a second piston with claws (9) in rotation in a pumping chamber (2) comprising an inlet orifice (11) and an outlet orifice (10) for the gaseous composition, the first rotating shaft (13) and the second rotating shaft (14) being configured to be rotated by a drive system (17, 18) located in a gear chamber (4),
**characterized**
**in that** the device (1, 30) comprises a first pair of seals (19) and a second pair of seals (20), each comprising a first shaft seal (19a, 20a) and a second shaft seal (19b, 20b), the first pair of seals (19) being provided around the first rotating shaft (13) and the second pair of seals (20) being provided around the second rotating shaft(14) between the pumping chamber (2) and the gear chamber (4),
**in that** the device (1, 30) comprises a pressure equalization chamber (25) which is in fluid connection with a gap (24) present between the first shaft seal (19a, 20a) and the second shaft seal (19b, 20b) of the first and second pair of shaft seals (19, 20) to regulate the pressure in the gap (24),
**in that** the gear chamber (4) is in fluid connection with the gap (24), and
**in that** the pumping chamber (2) is in fluid connection with the first shaft seal (19a) of the first pair of shaft seals (19) and with the first shaft seal (20a) of the second pair of shaft seals (20) by a pulsation-attenuating chamber (22).

2. Device (1, 30) according to claim 1, wherein at least one of the first shaft seal (19a) of the first shaft seal pair (19), the second shaft seal (19b) of the first shaft seal pair (19), the first shaft seal (20a) of the second shaft seal pair (20) and the second shaft seal (20b) of the second shaft seal pair (20) is a lip seal.

3. Device (1, 30) according to one of claims 1 or 2, wherein the fluidic connection between the gap (24) and the gear chamber (4) is effected via a pressure equalization channel (27) provided in the first rotating shaft (13) and/or in the second rotating shaft (14).

4. Device (1, 30) according to claim 3, comprising a lubricating fluid filter (28) between the pressure equalization channel (27) and the gear chamber (4).

5. A device (1, 30) according to any of the preceding claims, wherein a regulation inlet (29) is provided to control the pressure in the pressure equalization chamber (25) from outside the device.

6. A device (30) according to any of the preceding claims, in which the pulsation attenuation chamber (22) is in fluid connection with the pressure equalization chamber by a membrane (31) permeable to hydrogen gas but impermeable at least to water molecules in liquid and gaseous form.

7. A device (1, 30) according to any of the preceding claims, in which the fluidic connection between the pulsation attenuation chamber (22) and the pumping chamber (2) is at least partially in the form of a labyrinth.

8. A device (1, 30) according to any of the preceding claims, wherein the pulsation attenuation chamber (22) is in fluid connection with a discharge outlet (26).

9. A device (1, 30) according to any of the preceding claims, in which the inlet orifice (11) of the pumping chamber (2) is oriented in such a way to allow a drainage of a liquid under the effect of gravity.

10. Device (1, 30) according to any of the preceding claims and configured to raise the pressure of the at least partially gaseous hydrogencontaining composition at the inlet of a fuel cell in a pressure range of up to 15 bar, particularly from 1.5 to 5 bar absolute.

11. A fuel cell system (40, 50, 60, 70) comprising a gaseous composition reservoir comprising at least partially hydrogen (41), the reservoir (41) being connected to an inlet (43d) of a fuel cell (43),
**characterized in that**
the system comprises a recirculation device (1, 30) according to one of claims 1 to 15, an outlet (43e) of the fuel cell (43) being connected to the inlet (11) of the recirculation device (1, 30) and the outlet (10) of the recirculation device (1, 30) being connected to the inlet (43d) of the fuel cell (43).

12. Fuel cell system (40, 50, 60, 70, 80, 90) according to claim 11, comprising a water separator (45) in fluid connection with the fuel cell outlet (43) and with the inlet orifice of the device (1, 30) for recirculation.

13. Fuel cell system (40, 50, 60, 70, 80, 90) according to claim 12, comprising a relief valve (46) in fluid connection with the discharge outlet (45a) of the water separator (45).

14. Fuel cell system (40, 50, 60, 70, 80, 90) according to any of claims 11 to 13, wherein the regulation inlet (29) of the recirculation device (1, 30) is in fluid connection with the reservoir (41).

15. Fuel cell system (40, 50, 60, 70, 80, 90) according to any of claims 11 to 14, wherein the discharge outlet (26) of the recirculation device (1, 30) is in fluid connection with the discharge outlet (45a) of the water separator (45).
